(19) Europäisches Patentamt
European Patent Office
Office européen des brevets

(11) Veröffentlichungsnummer: **0 104 352**
**B1**

# (12) EUROPÄISCHE PATENTSCHRIFT

(45) Veröffentlichungstag der Patentschrift: **23.10.85**

(51) Int. Cl.⁴: **C 07 F 9/24**

(21) Anmeldenummer: **83107310.1**

(22) Anmeldetag: **26.07.83**

(54) **Verfahren zur Herstellung von O,S-Dimethyl-thiolophosphorsäureamid.**

(30) Priorität: **03.08.82 DE 3228868**

(43) Veröffentlichungstag der Anmeldung: **04.04.84 Patentblatt 84/14**

(45) Bekanntmachung des Hinweises auf die Patenterteilung: **23.10.85 Patentblatt 85/43**

(84) Benannte Vertragsstaaten: **BE CH DE FR GB IT LI**

(56) Entgegenhaltungen:
**DE - B - 1 077 215**
**DE - B - 1 210 835**
**DE - B - 1 246 730**
**DE - C - 1 135 905**

(73) Patentinhaber: **BAYER AG, Konzernverwaltung RP Patentabteilung, D-5090 Leverkusen 1 Bayerwerk (DE)**

(72) Erfinder: **Feyen, Peter, Dr., Mozartstrasse 1, D-4020 Mettmann (DE)**
Erfinder: **Seifert, Hermann, Dr., Birkenweg 3, D-5060 Bergisch Gladbach 2 (DE)**
Erfinder: **Köhler, Egon, Dr., Brandenburger Strasse 9, D-4047 Dormagen 1 (DE)**

**EP 0 104 352 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein neues Verfahren zur Herstellung von O,S-Dimethyl-thiolophosphorsäureamid. Diese Verbindung ist ein hochwirksames Insektizid und befindet sich unter den Warenzeichen Tamaron und Monitor im Handel (vgl. Pflanzenschutz und Schädlingsbekämpfungsmittel (Hrsg. K.-H. Büchel, Stuttgart: Thieme, 1977, Seite 29). Mehrere Möglichkeiten zur Herstellung des O,S-Dimethyl-thiolophosphorsäureamid sind bereits bekannt geworden vgl. z.B. DE-PS 1 668 094, DE-PS 1 080 109, DE-PS 1 210 835, DE-PS 1 246 730, DE-OS 2 552 945 und DE-OS 2 135 349). Die bekannten Verfahren haben jedoch Nachteile in der Aufwendigkeit der Herstellung, einer unbefriedigenden Reinheit des erhaltenen Produktes und/oder einer erforderlichen Entsorgung von Abluft und Abwasser über aufwendige Sekundärverfahren.

Es wurde nun gefunden, daß man das O,S-Dimethyl-thiolophosphorsäureamid der Formel I

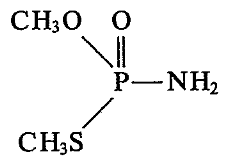

(I)

erhält, wenn man

a) das O,O-Diemthyl-thiophosphorsäureamid der Formel II

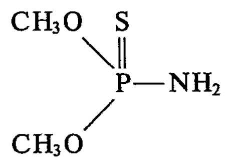

(II)

in Form seines technischen Rohprodukts, mit einer wäßrigen Lösung von KOH oder NaOH, in Gegenwart eines mit Wasser schwer mischbaren organischen Lösungsmittels, in das Salz der Formel III

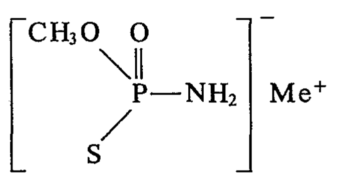

(III)

in welcher Me für Natrium oder Kalium steht, überführt, die wäßrige Phase abtrennt und gegebenenfalls das entstandene Methanol durch Destillation aus der wäßrigen Phase entfernt und

b) das Salz der Formel III in der auf diese Weise erhaltenen wäßrigen Lösung, gegebenenfalls nach Zusatz eines organischen Lösungsmittels, mit Methylbromid oder Methylchlorid in die Verbindung der Formel I umsetzt und entweder

c) die auf diese Weise gebildete Verbindung der Formel I, gegebenenfalls nach Entfernen des organischen Lösungsmittels, mit einem mit Wasser schwer mischbaren Lösungsmittel, in welchem die Verbindung der Formel I leicht löslich ist, aus dem wäßrigen Reaktionsgemisch extrahiert und die Verbindung der Formel I in üblicher Weise isoliert oder

d) das Reaktionsgemisch der Methylierungsstufe durch Destillation einengt bis das gebildete Alkalihalogenid ausgeschieden ist, das Alkalihalogenid abfiltriert und gegebenenfalls eine weitere Konzentrierung oder eine Isolierung der Verbindung der Formel I in üblicher Weise vornimmt.

Es muß als ausgesprochen überraschend angesehen werden, daß nach dem erfindungsgemäßen Verfahren die Verbindung der Formel I in hoher Reinheit und Ausbeute aus Ausgangsprodukten der Formel II, welche noch die Nebenprodukte der technischen Herstellung (wie O,O,O-Trimethylthiophosphat) enthalten, hergestellt werden kann. Da es bekannt ist, daß die Verbindung der Formel I recht thermolabil ist und leicht zu einer Vielzahl von Produkten weiterreagieren kann und auch damit zu rechnen war, daß das Salz der Formel III weitere Verseifungs- und Umlagerungsreaktionen eingehen würde, hätte man eigentlich erwarten müssen, daß auf dem eingeschlagenen Weg das gewünschte Produkt (Verbindung der Formel I) nur in niedriger Ausbeute und in schlechter Reinheit erhalten würde.

Das erfindungsgemäße Verfahren bietet außer der hohen Ausbeute und Reinheit an Endprodukt auch den Vorteil einer einfachen Durchführung bei geringen Abwassermengen, welche kaum Ammoniak enthalten und leicht gereinigt werden können.

Das erfindungsgemäße Verfahren kann durch das folgende Formelschema erläutert werden (wobei

Lösungsmittel und andere Reaktionsparameter nicht angegeben werden):

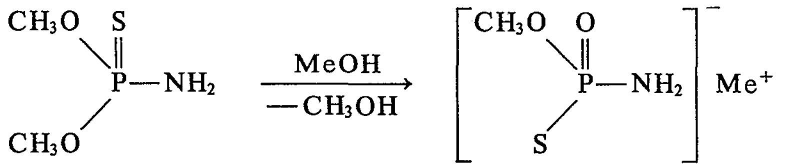


(II) (III)

(III)

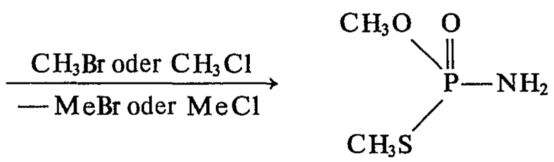


(I)

(Me = Natrium oder Kalium)

Die für das erfindungsgemäße Verfahren verwendeten Ausgangsstoffe sind bekannt. Das O,O-Dimethyl-thiophosphorsäureamid der Formel II ist von technischer Qualität und kann sogar über 20% Verunreinigungen (wie O,O,O-Trimethylthiophosphat) enthalten. Die Verunreinigungen beeinflussen das Ergebnis nicht nachteilig, sofern sie (was im allgemeinen der Fall ist) im organischen Lösungsmittel (bei der Salzbildung) besser löslich sind, als in Wasser und somit mit der organischen Phase entfernt werden.

Als organisches Lösungsmittel kommen bei der Salzbildung (Verfahrensstufe [a]) praktisch alle mit Wasser schwer mischbaren organischen Lösungsmittel in Frage, wie gegebenenfalls halogenierte aliphatische und aromatische Kohlenwasserstoffe, wobei beispielsweise Chlorbenzol, Xylole und Toluol genannt seien. Bevorzugt wird aus praktischen Gründen Toluol eingesetzt.

Für die Methylierungsstufe (b) können übliche organische Lösungsmittel zugesetzt werden, wobei beispielsweise die Alkohole mit 1 bis 6 Kohlenstoffatomen, vorzugsweise Methanol, iso-Propanol, iso- und n-Butanol genannt seien.

Die Reaktionstemperaturen bei der Salzbildungsstufe (a) liegen zwischen 30 bis 60°C, vorzugsweise zwischen 35 und 45°C und besonders bevorzugt zwischen 38 und 43°C.

Die Reaktionstemperaturen bei der Methylierungsstufe (b) liegen zwischen 45 und 70°C, vorzugsweise zwischen 50 und 65°C und besonders zwischen 53 und 62°C.

Die Methylierungsstufe (b) wird bei pH-Wert-Bereichen zwischen 3 und 9, vorzugsweise zwischen 4 und 8,5 und besonders bevorzugt zwischen 6 und 8 durchgeführt. Bei der Verwendung von Methylchlorid wird ein pH-Wert-Bereich zwischen 6 und 7 und bei der Verwendung von Methylbromid ein pH-Werte-Bereich zwischen 7,5 und 8 besonders bevorzugt.

Der gewünschte pH-Wert kann leicht durch die Zugabe von KOH oder einer Säure, wie HCl eingestellt werden.

Die Methylierungsstufe (b) wird bei der Verwendung von Methylbromid zweckmäßigerweise unter Normaldruck durchgeführt. Bei Einsatz von Methylchlorid erfolgt die Umsetzung zweckmäßigerweise unter Druck in einem Druckbereich von 1 bis 10 bar, vorzugsweise von 2 bis 7 bar.

In der Salzbildungsstufe (a) werden (bezogen auf die Verbindung der Formel (II) äquivalente oder leicht überschüssige Mengen KOH oder NaOH verwendet. Vorzugsweise werden je Mol der Verbindung der Formel II 1,0 bis 1,2 insbesondere 1,05 bis 1,1 Moläquivalente KOH oder NaOH eingesetzt.

In der Methylierungsstufe (b) werden Methylchlorid oder Methylbromid (bezogen auf die Verbindung der Formel II) in äquimolaren oder überschüssigen Mengen eingesetzt, wobei auch Überschüsse bis zu 30 Molprozent verwendet werden können. Je Mol der Verbindung der Formel II werden vorzugsweise 1,0 bis 1,25 und besonders bevorzugt 1,05 bis 1,2 Mol des Methylhalogenids verwendet.

In der Salzbildungsstufe wird das Alkalihydroxid vorzugsweise in einer wäßrigen Lösung mit Konzentrationen von 25 bis 60%, insbesondere von 40 bis 58% (Gewichtsprozent) eingesetzt.

In dieser Salzbildungsstufe liegt die Verbindung der Formel II zweckmäßigerweise vorzugsweise in einer 5- bis 85 %igen und besonders bevorzugt in einer 10- bis 80 %igen (Gewichtsprozent) Lösung in dem mit Wasser schwer mischbaren organischen Lösungsmittel vor.

Nach der Salzbildungsstufe wird die organische Phase, in welcher auch der Hauptanteil an unerwünschten Verunreinigungen des Ausgangsmaterials erhalten ist, in üblicher Weise abgetrennt.

Das bei der Salzbildungsreaktion gebildete Methanol wird gewünschtenfalls durch Destillation entfernt. Für die anschließende Methylierungsreaktion wird zweckmäßigerweise ein organisches Lösungsmittel hinzugefügt. Wichtig für eine hohe Selektivität bei der Methylierungsreaktion ist die Wahl der Konzentration des Salzes der Formel III im Lösungsmittelsystem Wasser/organisches Lösungsmittel. Besonders günstige Ergebnisse werden mit Konzentrationen zwischen 5 und 60%, insbesondere zwischen 10 und 50% (Gewichtsprozent) an Salz der Formel III im Reaktionsmedium erhalten.

Auch die Wahl des Verhältnisses Wasser zu organischem Lösungsmittel im Reaktionsmedium ist bei der Methylierungsreaktion von Bedeutung. Besonders gute Ergebnisse werden erhalten, wenn das Verhältnis Wasser zu organischem Lösungsmittel zwischen 100 bis 50% von 0 bis 50% vorzugsweise zwischen 75 bis 50% zu 25 bis 50% (Gewichtsprozent) beträgt.

Zur Isolierung der Verbindung der Formel I wird nach der Methylierungsreaktion das organische Lösungsmittel durch Destillation entfernt, wenn dieses Lösungsmittel nicht auch für die nachfolgende Extraktionsstufe verwendet werden soll bzw. kann. Falls in der nachfolgenden Extraktionsstufe mit möglichst geringen Volumina gearbeitet werden soll, kann auch das Wasser ganz oder teilweise abdestilliert werden. Gegebenenfalls ausgeschiedenes Alkalihalogenid kann abfiltriert werden.

Die Verbindung der Formel I wird aus der gegebenenfalls auf diese Weise aufgearbeiteten Reaktionsgemisch durch Extraktion mit einem geeigneten organischen Lösungsmittel abgetrennt. Hierzu sind alle mit Wasser schwer mischbaren organischen Lösungsmittel verwendbar, in welchen die Verbindung der Formel I leicht löslich ist. Beispielhaft seien höhere Ketone, wie Methylisobutylketon, gegebenenfalls halogenierte aromatische oder aliphatische Kohlenwasserstoffe, wie Chloroform, Chlorbenzol und Toluol, Ester, wie Essigsäureethylester und höhere Alkohole wie n- und i-Butanol aufgeführt. Aus praktischen Gründen werden n- und iso-Butanol besonders bevorzugt verwendet.

Die Extraktion der Verbindung der Formel I erfolgt in üblicher Weise, z.B. mehrstufig.

Nach der Extraktion wird die organische Phase nochmals mit Wasser gewaschen (welches in den Prozeß zurückgeführt werden kann) und das organische Lösungsmittel durch Destillation entfernt. Als Rückstand bleibt die Verbindung der Formel I in einer für die meisten Zwecke ausreichenden Reinheit von über 95 % in Ausbeuten von über 85 % der Theorie (durch nochmalige Extraktion des Waschwassers kann die Ausbeute sogar noch gesteigert werden) bezogen auf die Menge an eingesetzter Ausgangsverbindung der Formel II.

Wenn bei der Methylierungsstufe ein geeignetes Lösungsmittel z.B. n-Butanol zugesetzt wird, kann auch auf die Extraktion verzichtet werden. Man engt das Reaktionsgemisch (durch Destillation in Vakuum) ein, filtriert vom ausgeschiedenen Alkalihalogenid ab und erhält eine Lösung des gewünschten Produktes, welche in üblicher Weise weiter aufkonzentriert werden kann oder welcher die Verbindung der Formel I isoliert werden kann.

Bevorzugt wird jedoch beim erfindungsgemäßen Verfahren die Extraktionsmethode eingesetzt.

Das erfindungsgemäße Verfahren soll anhand der folgenden Beispiele erläutert werden (Alle %-Angaben beziehen sich — wo nicht anders angegeben — auf Gewichtsprozente):

## Beispiel 1

Zu der Lösung von 613,5 g (4,0 Mol) O,O-Dimethyl-thiophosphorsäureamid (techn. 92 %) in 1078 g Toluol werden bei 40°C unter Kühlung 466,1 g (4,2 Mol) Kalilauge 50,55 % zugetropft. Man läßt noch 1 Stunde bei 40°C nachreagieren und trennt die Phasen. Von der wäßrigen Phase werden ca. 150 g eines Gemisches aus Methanol und Wasser im Vakuum abdestilliert. Nach Zusatz von 1200 g n-Butanol werden bei 55°C 390 g (4,1 Mol) Methylbromid eingeleitet. Während dieser Reaktion wird der pH-Wert zwischen 7,5 und 8 gehalten. Nach beendeter Reaktion werden weitere 1200 g n-Butanol zugesetzt. Anschließend wird im Vakuum solange Lösungsmittel und überschüssiges Methylbromid abdestilliert, bis der Wassergehalt im Sumpf ≤ 0,2 % (nach K. Fischer) erreicht hat. Es wird vom ausgeschiedenen Kaliumbromid abfiltriert. Der Rückstand wird mit 400 g n-Butanol gewaschen. Die vereinigten Filtrate werden im Vakuum aufkonzentriert und anschließend analysiert.

Man erhält als Auswaage

| | | |
|---|---|---|
| | 939,1 g | einer O,S-Dimethyl-thiolophosphorsäureamid-Lösung (n-Butanol als Lösungsmittel) |
| Gehalt: | 59,3 % | nach HPLC |
| Ausbeute: | 98,7 % | der Theorie (bezogen auf eingesetztes O,O-Dimethyl-thiophosphorsäureamid) |

## Beispiel 2

Die Durchführung erfolgt wie in Beispiel 1 beschrieben, jedoch wird n-Butanol durch iso-Butanol ersetzt:

| | | |
|---|---|---|
| Auswaage: | 931,8 g | O,S-Dimethyl-thiolophosphorsäureamid-Lösung (iso-Butanol als Lösungsmittel) |
| Gehalt: | 57,5 g | nach HPLC |
| Ausbeute: | 94,9 g | der Theorie (bezogen auf eingesetztes O,O-Dimethyl-thiophosphorsäureamid). |

Beispiel 3

Die Durchführung erfolgt wie in Beispiel 1 beschrieben, jedoch wird n-Butanol durch Isopropanol ersetzt.

| | | |
|---|---|---|
| Auswaage: | 934,6 g | Thiophosphorsäure-O,S-dimethylesteramid-Lösung (Isopropanol als Lösungsmittel) |
| Gehalt: | 57,7 % | nach HPLC |
| Ausbeute: | 95,6 % | der Theorie (bezogen auf eingesetztes O,O-Dimethyl-thiophosphorsäureamid). |

Beispiel 4

Die Durchführung wie in Beispiel 1 beschrieben, jedoch wird Kaliumhydroxid durch 337,3 g (4,2 Mol) Natronlauge 49,8 %ig ersetzt.

| | | |
|---|---|---|
| Auswaage: | 943,6 g | O,S-Dimethyl-thiolophosphorsäureamid-Lösung (n-Butanol als Lösungsmittel) |
| Gehalt: | 56,9 % | |
| Ausbeute: | 95,2 % | der Theorie (bezogen auf eingesetztes O,O-Dimethyl-thiophosphorsäureamid). |

Beispiel 5

Zu einer Mischung aus 161 g rohem O,O-Dimethyl-thiophosphorsäureamid, welches 21 g Verunreinigungen enthält (wie O,O,O-Trimethyl-thiophosphorsäureester, O,O,S-Trimethyl-thiophosphorsäureester, Thiophosphorsäure-O-methylesteramid-Na-Salz und Thiophosphorsäure-S-methylesteramid-Na-Salze, usw.) und 208 g Toluol werden 120 g Wasser gegeben und die Mischung auf 40°C erwärmt. Bei dieser Temperatur werden innerhalb 10—15 Minuten 1,09 Mol 45 %iges Natriumhydroxid in Wasser zugetropft (Kühlung).

Anschließend wird noch 30 Minuten bei 40°C nachgerührt und die organische Phase abgetrennt.

Zur wäßrigen Phase gibt man 108 g Wasser und 118 g Methanol, stellt mit verdünnter Salzsäure auf pH 6,5 und heizt die Mischung in einem Druckbehälter auf 60°C. Bei gleicher Temperatur und gleichem pH-Wert (eventuell Zugabe von verdünnter Natronlauge) werden nun mit einer Pumpe 58 g Methylchlorid innerhalb 15 Minuten in den Reaktor gepumpt. Es stellt sich ein Druck von 6 bar ein, der nun allmählich innerhalb von 2 bis 3 Stunden auf einen konstanten Wert (ca. 2 bar) abfällt. Zur Vernichtung des überschüssigen Methylchlorids und anderer Abgase wird der Druckbehälter über Absorptionsstürme entspannt (1. methanolische Natronlauge, 2. Chlorlauge).

Zur Aufarbeitung des gebildeten O,S-Dimethylamidthiophosphats wird das überschüssige Methylbromid, das Methanol sowie teilweise Wasser vollständig im Vakuum abdestilliert. Das noch warme Sumpfprodukt wird nun in einer 5stufigen Extraktion bei ca. 45°C mit insgesamt der gleichen Menge iso-Butanol bezogen auf die Wasserphase extrahiert, so daß der Gehalt an O,S-Dimethyl-thiolophosphorsäureamid $< 1$ % in der Wasserphase ist.

Die iso-Butanol-Extrakte werden noch einmal mit Wasser gewaschen und dann im Vakuum in eine 2stufige Destillation vollständig eingeengt.

Man erhält in 86 %iger Ausbeute 97,3 %iges O,S-Dimethylthiolophosphorsäureamid. Mehr als 4 % der Ausbeute sind noch in den Wasserphasen, von denen das Nachwaschwasser in einem späteren Ansatz zum Auflösen des gebildeten Natriumchlorids eingesetzt werden kann. Mann kommt dann auf insgesamt über 90 % Produktausbeute.

Für kleinere Ansätze empfiehlt sich als Alternative auch das Natriumchlorid nach Reaktionsende abzusaugen und dann mit insgesamt kleineren Volumina die Extraktion durchzuführen.

**Patentansprüche**

1. Verfahren zur Herstellung von O,S-Dimethyl-thiolophosphorsäureamid der Formel I

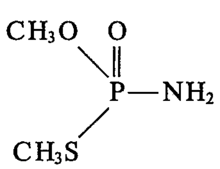

(I)

dadurch gekennzeichnet, daß man

a) das O,O-Diemthyl-thiophosphorsäureamid der Formel II

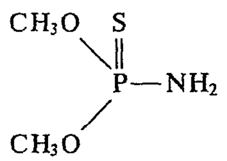

(II)

in Form seines technischen Rohprodukts mit einer wäßrigen Lösung von KOH oder NaOH, in Gegenwart eines mit Wasser schwer mischbaren organischen Lösungsmittels, in das Salz der Formel III

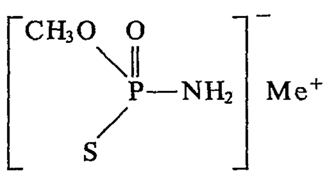

(III)

in welcher Me für Natrium oder Kalium steht, überführt, die wäßrige Phase abtrennt und gegebenenfalls das entstandene Methanol durch Destillation aus der wäßrigen Phase entfernt und

b) das Salz der Formel III in der auf diese Weise erhaltenen wäßrigen Lösung, gegebenenfalls nach Zusatz eines organischen Lösungsmittels, mit Methylbromid oder Methylchlorid zur Verbindung der Formel I umsetzt und entweder

c) die auf diese Weise gebildete Verbindung der Formel I, gegebenenfalls nach Entfernen des organischen Lösungsmittels, mit einem mit Wasser schwer mischbaren Lösungsmittel, in welchem die Verbindung der Formel I leicht löslich ist, aus dem wäßrigen Reaktionsgemisch extrahiert und die Verbindung der Formel I aus den Extrakten in üblicher Weise isoliert oder

d) das Reaktionsgemisch der Methylierungsstufe durch Destillation einengt bis das organische Lösungsmittel entfernt und das gebildete Alkalihalogenid ausgeschieden ist, das Alkalihalogenid abfiltriert und gegebenenfalls eine weitere Konzentration oder eine Isolierung der Verbindung der Formel I in üblicher Weise z. B. unter Extraktion vornimmt.

2. Verfahren gemäß Anspruch 1, dadurch gekennzeichnet, daß die Salzbildungsreaktion bei Temperaturen zwischen 30 und 60°C und die Methylierungsreaktion bei Temperaturen zwischen 45 und 70°C durchgeführt wird.

3. Verfahren gemäß den Ansprüchen 1 und 2, dadurch gekennzeichnet, daß man die Methylierungsreaktion bei pH-Werten zwischen 3 und 9 durchführt.

4. Verfahren gemäß den Ansprüchen 1 bis 3, dadurch gekennzeichnet, daß man je eingesetztem Mol der Verbindung der Formel II bei der Salzbildungsreaktion 1 bis 1,2 Moläquivalente KOH oder NaOH und bei der Methylierungsreaktion 1,0 bis 1,25 Mol Methylchlorid oder Methylbromid einsetzt.

5. Verfahren gemäß den Ansprüchen 1 bis 4, dadurch gekennzeichnet, daß als mit Wasser schwer mischbares organisches Lösungsmittel in der Salzbildungsstufe Toluol verwendet wird.

6. Verfahren gemäß den Ansprüchen 1 bis 4, dadurch gekennzeichnet, daß als organisches Lösungsmittel in der Methylierungsstufe ein Alkohol mit 1 bis 6 Kohlenstoffatomen eingesetzt wird.

7. Verfahren gemäß den Ansprüchen 1 bis 4, dadurch gekennzeichnet, daß als organisches Lösungsmittel in der Methylierungsstufe n- oder iso-Butanol verwendet wird.

8. Verfahren gemäß den Ansprüchen 1 bis 4, dadurch gekennzeichnet, daß als mit Wasser schwer mischbares organisches Lösungsmittel in der Salzbildungsstufe Toluol und als organisches Lösungsmittel in der Methylierungsstufe n- oder iso-Butanol verwendet wird.

9. Verfahren gemäß den Ansprüchen 1 bis 8, dadurch gekennzeichnet, daß die Verbindung der Formel I durch Extraktion abgetrennt wird.

10. Verfahren gemäß Anspruch 9, dadurch gekennzeichnet, daß als Extraktionsmittel n- oder iso-Butanol verwendet wird.

## Claims

1. Process for the preparation of O,S-dimethylthiolophosphoric acid amide of the formula I

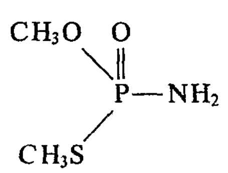

(I)

characterised in that

a) the O,O-dimethyl-thiophosphoric acid amide of the formula II

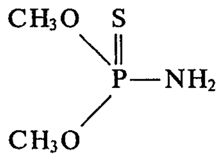

(II)

in the crude form of its industrial crude product, is converted with an aqueous solution of KOH or NaOH, in the presence of a sparingly water-miscible organic solvent, to the salt of the formula III

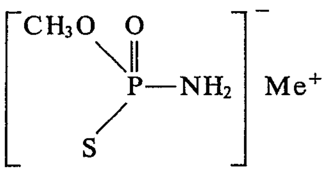

(III)

in which Me represents sodium or potassium, the aqueous phase is separated off and if appropriate the methanol formed is removed from the aqueous phase by distillation, and

b) the salt of the formula III in the aqueous solution obtained in this manner, if appropiate after the addition of an organic solvent, is converted with methyl bromide or methyl chloride to the compound of the formula I, and either

c) the compound of the formula I formed in this manner, if appropiate after removal of the organic solvent, is extracted from the aqueous reaction mixture with a sparingly water-miscible solvent in which the compound of the formula I is readily soluble, and the compound of the formula I is isolated in a customary manner from the extracts, or

d) the reaction mixture from the methylation stage is concentrated, by distillation, until the organic solvent has been removed and the alkali metal halide formed has separated out, the alkali metal halide is filtered off and if appropriate further concentration is carried out or the compound of the formula I is isolated in a customary manner, for example with extraction.

2. Process according to Claim 1, characterised in that the salt formation reaction is carried out at temperatures between 30 and 60°C, and the methylation reaction at temperatures between 45 and 70°C.

3. Process according to Claims 1 and 2, characterised in that the methylation reaction is carried out at pH values between 3 and 9.

4. Process according to Claims 1 to 3, characterised in that, per mol of compound of the formula II employed, 1 to 1,2 mol equivalents of KOH or NaOH are used in the salt formation reaction, and 1,0 to 1,25 mols of methyl chloride or methyl bromide are used in the methylation reaction.

5. Process according to Claims 1 to 4, characterised in that toluene is used as the sparingly water-miscible organic solvent in the salt formation stage.

6. Process according to Claims 1 to 4, characterised in that an alcohol having 1 to 6 carbon atoms is employed as the organic solvent in the methylation stage.

7. Process according to Claims 1 to 4, characterised in that n- or iso-butanol is used as the organic solvent in the methylation stage.

8. Process according to Claims 1 to 4, characterised in that toluene is used as the sparingly water-miscible organic solvent in the salt formation stage, and n- or iso-butanol is used as the organic solvent in the methylation stage.

9. Process according to Claims 1 to 8, characterised in that the compound of the formula I is separated off by extraction.

10. Process according to Claim 9, characterised in that n- or iso-butanol is used as the extracting agent.

## Revendications

1. Procédé de production de O,S-diméthylthiolophosphoramide de formule I

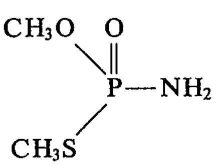

(I)

caractérisé en ce que:

a) on transforme le O,O-dimethylthiophosphoramide de formule II

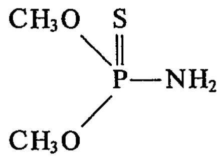

(II)

sous la forme de son produit technique brut avec une solution aqueuse de KOH ou de NaOH en présence d'un solvant organique peu miscible à l'eau, en le sel de formule III

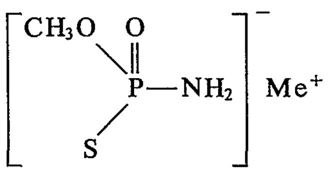

(III)

dans laquelle Me représente le sodium ou le potassium, on sépare la phase aqueuse et on en élimine éventuellement par distillation le méthanol formé et

b) on fait réagir le sel de formule III dans la solution aqueuse obtenue de cette façon, éventuellement aprés addition d'un solvant organique, avec le bromure de méthyle ou le chlorure de méthyle pour former le composé de formule I et

c) ou bien on extrait du mélange réactionnel aqueux le composé de formule I formé de cette façon, éventuellement après élimination du solvant organique, avec un solvant peu miscible à l'eau dans lequel le composé de formule I est très soluble et on isole des extraits, d'une manière classique, le composé de formule I, ou bien

d) on concentre le mélange réactionnel de l'étape de méthylation par distillation jusqu'à ce que le solvant organique soit éliminé et l'halogénure alcalin formé soit précipité, on enlève par filtration l'halogénure alcalin et on effectue le cas échéant une autre concentration ou un isolement du composé de formule I d'une manière classique, par exemple par extraction.

2. Procédé suivant la revendication 1, caractérisé en ce que la réaction de formation de sel est conduite à des températures comprises entre 30 et 60°C et la réaction de méthylation est conduite à des températures comprises entre 45 et 70°C.

3. Procédé suivant les revendications 1 et 2, caractérisé en ce qu'on conduit la réaction de méthylation à des valeurs de pH comprises entre 3 et 9.

4. Procédé suivant les revendications 1 à 3, caractérisé en ce qu'on utilise, par mole en réaction du composé de formule II, 1 à 1,2 équivalent molaire de KOH ou de NaOH dans la réaction de formation d'un sel et 1,0 à 1,25 mole de chlorure ou de bromure de méthyle dans la réaction de méthylation.

5. Procédé suivant les revendications 1 à 4, caractérisé en ce qu'on utilise le toluène comme solvant organique peu miscible à l'eau dans l'étape de formation d'un sel.

6. Procédé suivant les revendications 1 à 4, caractérisé en ce qu'on utilise un alcool ayant 1 à 6 atomes de carbone comme solvant organique dans l'étape de méthylation.

7. Procédé suivant les revendications 1 à 4, caractérisé en ce qu'on utilise le n-butanol ou l'iso-butanol comme solvant organique dans l'étape de méthylation.

8. Procédé suivant les revendications 1 à 4, caractérisé en ce qu'on utilise le n-butanol ou l'iso-butanol comme solvant organique peu miscible à l'eau dans l'étape de formation d'un sel et comme solvant organique dans l'étape de méthylation.

9. Procédé suivant les revendications 1 à 8, caractérisé en ce qu'on sépare le composé de formule I par extraction.

10. Procédé suivant la revendication 9, caractérisé en ce qu'on utilise le n-butanol ou l'isobutanol comme agent d'extraction.